# EUROPÄISCHE PATENTSCHRIFT

(11) **EP 2 307 163 B1**
(45) Veröffentlichungstag und Bekanntmachung des Hinweises auf die Patenterteilung: **07.09.2016**
(21) Anmeldenummer: 09781026.1
(22) Anmeldetag: 24.07.2009
(51) Int. Cl.: B23B 29/03, B23B 27/14, B23B 51/04

(54) **AUFBOHRWERKZEUG MIT STÜTZELEMENT**
BORING TOOL WITH SUPPORT ELEMENT
OUTIL D'ALÉSAGE ÉQUIPÉ D'UN ÉLÉMENT DE SUPPORT

(30) Priorität: 07.08.2008 DE 102008036726
(43) Veröffentlichungstag der Anmeldung: 13.04.2011
(73) Patentinhaber: Komet Group GmbH, 74354 Besigheim (DE)
(72) Erfinder: HODZA, Erkan, 71679 Asperg (DE); SCHÜTT, Henry, 74343 Sachsenheim (DE); KRETZSCHMANN, Uwe, 21483 Wangelau (DE)
(74) Vertreter: Wolf, Eckhard
(86) Internationale Anmeldenummer: PCT/EP2009/059550
(87) Internationale Veröffentlichungsnummer: WO 2010/015530

(56) Entgegenhaltungen:
- EP-A1- 0 586 423
- EP-A1- 1 281 466
- WO-A1-01/85375
- WO-A1-02/14003
- WO-A2-2004/024381

## Beschreibung

Die Erfindung betrifft ein Bohrwerkzeug für den Einsatz in Werkzeugmaschinen mit mindestens zwei in gleichem Umfangsabstand voneinander angeordneten Schneidplatten, die je eine an ihrem äußersten Ende bei drehendem Einsatz einen Flugkreisradius definierende aktive Hauptschneiden aufweisen, mit je einer entgegen einer Vorschubrichtung an das äußerste Ende der jeweiligen Hauptschneide anschließenden, über ihre gesamte Länge auf einem gegenüber dem Flugkreisradius kleineren Radius angeordneten Nebenschneide und mit je einer entgegen der Drehrichtung an die Nebenschneide anschließenden, die Führung des Bohrwerkzeugs unterstützenden Nebenschneidenfreifläche.

Es sind Bohrwerkzeuge dieser Art bekannt (WO2004/024381), die als doppelschneidige Vollbohrer ausgebildet sind, deren aktive Hauptschneiden sich von einer Bohrerspitze aus bis zur Plattenecke erstrecken und bei drehendem Einsatz ein Bohrloch mit dem Radius des Flugkreises in einem Werkstück erzeugen. Die als Wechselschneidplatten ausgebildeten Schneidplatten weisen Führungsfasen auf, die die Führung des Bohrwerkzeugs im Bohrloch unterstützen. Weiter bilden die Hauptschneiden des Vollbohrers einen spitzen Winkel miteinander, der eine Zentrierung des Bohrers im Bohrloch gewährleistet. Für die Verwendung des bekannten Vollbohrers als Aufbohrwerkzeug reichen die Führungsfasen für eine Zentrierung in einem vorgeformten Bohrloch jedoch nicht aus. Um einen solchen Nachteil zu vermeiden, wurde bei Vollbohrern bereits vorgeschlagen, Stützelemente in Form von Stützleisten oder balligen Stützelementen vorzusehen, die üblicherweise im Abstand von der Schneidplatte am Grundkörper des Bohrwerkzeugs angeordnet sind (EP-0 586 423 B1). Der Umlaufradius der Stützelemente ist dort geringfügig kleiner als der Flugkreisradius der aktiven Hauptschneide, so dass die Stützelemente erst beim Durchbohren wirksam werden, wenn die Hauptschneide beim Bohrvorgang aus der Bohrung austritt und ihre Führungsfunktion verliert.

Ausgehend hiervon liegt der Erfindung die Aufgabe zugrunde, ein Bohrwerkzeug der eingangs angegebenen Art dahingehend zu verbessern, dass Vorkehrungen getroffen werden, die während des Bohrvorgangs eine Abstützfunktion innerhalb der Bohrung übernehmen.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, dass bei einem als Aufbohrwerkzeug ausgebildeten Bohrwerkzeug, dessen aktive Hauptschneiden im Bereich einer Plattenecke der Schneidplatten angeordnet sind und bei drehendem Einsatz mit einer vorgegebenen Schnitttiefe im Bereich eines vorgeformten Rundlochs in ein Werkstück eindringen, an jeder Schneidplatte eine Nebenschneidenfläche mit einer Stützpartie vorgesehen ist, die beim Bohrbetrieb einen gegenüber dem Flugkreisradius größeren Umlaufradius aufweist. Damit soll erreicht werden, dass schon während des Bohrvorgangs ein Abstützvorgang des Aufbohrwerkzeugs erfolgt, wodurch zugleich eine Glättung und damit eine Verfeinerung der Werkstückoberfläche im Bereich der Bohrungswand erzielt wird. Um dies zu erreichen, wird gemäß der Erfindung vorgeschlagen, dass die Nebenschneidenfreifläche einer jeden Schneidplatte eine Stützpartie aufweist, die entgegen der Drehrichtung im Abstand von der Nebenschneide und entgegen der Vorschubrichtung im Abstand von der Hauptschneide angeordnet ist, und deren Umlaufradius um ein Überstandsmaß größer als der Flugkreisradius der aktiven Hauptschneide ist.

Eine bevorzugte Ausgestaltung der Erfindung sieht vor, dass die Nebenschneidenfreifläche durch eine im Abstand entgegen der Drehrichtung von der Nebenschneide angeordnete Verrundung in eine primäre und eine sekundäre Nebenschneidenfreifläche unterteilt ist, wobei die Stützpartie im Bereich der Verrundung angeordnet ist. Vorteilhafterweise ist die Stützpartie in Vorschubrichtung langgestreckt ausgebildet. Sie weist zweckmäßig die Umrissgestalt eines in Vorschubrichtung langgestreckten Rechtecks oder eines langgestreckten Dreiecks auf. Unterschiedliche Umrissformen lassen sich vor allem durch unterschiedliche Neigungen der Stützpartie gegenüber der Drehachse erzeugen. So kann das langgestreckte Dreieck entweder in der Vorschubrichtung oder entgegen der Vorschubrichtung spitz zulaufen. Das Überstandsmaß der Stützpartie wird vorteilhafterweise < 20 µm, vorzugsweise < 5 µm gewählt, während der axiale Abstand der Stützpartie von der Hauptschneide bevorzugt 0,01 R bis 0,04 R gewählt wird, wobei R den Flugkreisradius der Hauptschneide bedeutet.

Eine weitere bevorzugte Ausgestaltung der Erfindung sieht vor, dass mindestens zwei in gleichem Umfangsabstand voneinander angeordnete Schneidplatten vorgesehen sind. Weiter ist es von Vorteil, wenn die als Wendeschneidplatte ausgebildete Schneidplatte mindestens zwei Hauptschneiden mit den zugehörigen Stützpartien aufweist. Die Wendeschneidplatten werden mittels eines Klemm- oder Spannelements in einem Grundkörper fixiert. Das Klemmelement ist dabei zweckmäßig als Klemmschraube ausgebildet.

Die erfindungsgemäßen Maßnahmen lassen sich an Wendeschneidplatten verwirklichen, die entweder radial liegend, radial stehend oder tangential stehend am Grundkörper angeordnet sind.

Im Folgenden wird die Erfindung anhand der in der Zeichnung in schematischer Weise dargestellten Ausführungsbeispiele näher erläutert. Es zeigen
- Fig. 1a: eine schaubildliche Darstellung eines Aufbohrwerkzeugs mit vier radial liegend eingebauten Wendeschneidplatten;
- Fig. 1b: eine Seitenansicht des Aufbohrwerkzeugs nach Fig. 1 a im Zuge des Bohrvorgangs;
- Fig. 1c: eine zweischneidige Wendeschneidplatte für den radial liegenden oder tangential stehenden Einbau in einen Grundkörper gemäß Fig. 1a;
- Fig. 1d: eine schaubildliche Darstellung einer Wendeschneidplatte des Bohrwerkzeugs nach Fig. 1a mit angedeuteter Bohrungswand und im Umriss dreieckiger Stützpartie;
- Fig. 2a: eine schaubildliche Darstellung eines Aufbohrwerkzeugs mit vier tangential stehend eingebauten Wendeschneidplatten;
- Fig. 2b: eine Seitenansicht des Aufbohrwerkzeugs nach Fig. 2a im Zuge des Bohrvorgangs;
- Fig. 3a: eine schaubildliche Darstellung eines Aufbohrwerkzeugs mit vier radial stehend eingebauten Wendeschneidplatten;
- Fig. 3b: eine Seitenansicht des Bohrwerkzeugs nach Fig. 3a im Zuge eines Aufbohrvorgangs;
- Fig. 3c: eine schaubildliche Darstellung der Wendeschneidplatte des Bohrwerkzeugs nach Fig. 3a und 3b;
- Fig. 3d: eine schaubildliche Darstellung der Wendeschneidplatte nach Fig. 3a mit angedeuteter Bohrungswand und im Umriss langgestreckt rechteckiger Stützpartie;
- Fig. 3e: eine Darstellung entsprechend Fig. 3d mit im Umriss dreieckiger Stützpartie;
- Fig. 4a: eine schaubildliche Darstellung eines Aufbohrwerkzeugs mit drei radial stehend eingebauten, im Umriss dreieckigen Wendeschneidplatte;
- Fig. 4b: eine Seitenansicht des Bohrwerkzeugs nach Fig. 4a im Zuge eines Aufbohrvorgangs;
- Fig. 4c: eine schaubildliche Darstellung der im Umriss dreieckigen Wendeschneidplatte nach Fig. 4a und Fig. 4b;
- Fig. 5: ein Schema der Anschnittgeometrie im Bereich der Nebenschneide und der Nebenschneidenfreiflächen zur Veranschaulichung der geometrischen Verhältnisse beim Aufbohrvorgang.

Die in der Zeichnung dargestellten Schneidwerkzeuge sind durchweg als Aufbohrwerkzeuge ausgebildet, die zum Aufbohren eines Werkstücks im Bereich eines vorgeformten Rundlochs bestimmt sind. Die Schneidwerkzeuge bestehen im Wesentlichen aus einem Schaft 10, einem stirnseitig am Schaft angeordneten Grundkörper 12 und einem am rückwärtigen Ende des Schafts 10 angeordneten Kupplungselement 14, mit welchem das Schneidwerkzeug lösbar mit einer Werkzeugspindel einer Werkzeugmaschine kuppelbar ist. Am Grundkörper 12 sind jeweils mehrere, in Umfangsrichtung einen Abstand voneinander aufweisende, als Wendeschneidplatten ausgebildete Schneidplatten 16',16",16'",16^{IV} angeordnet, die im Bereich ihrer aktiven Hauptschneiden axial und radial über den Grundkörper 12 überstehen. Die an die aktiven Hauptschneiden anschließenden, in den Grundkörper 12 eingeformten Spannuten 18 sorgen dafür, dass die beim Aufbohrvorgang entstehenden Späne aufgenommen und entgegen der Vorschubrichtung 34 abgeführt werden können.

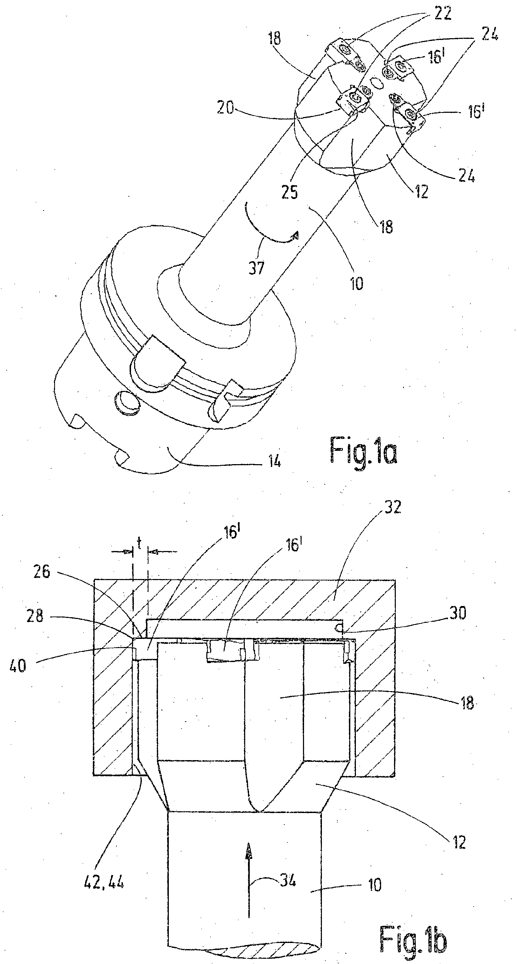

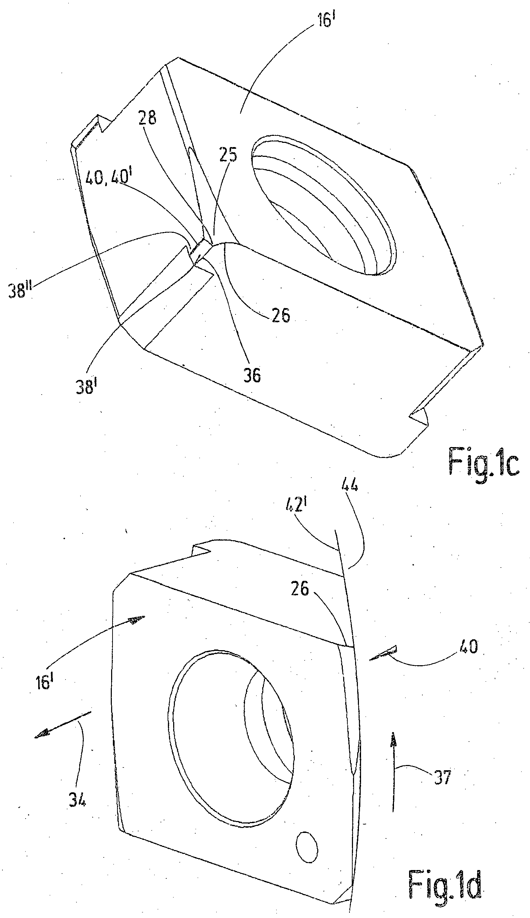

Die Schneidplatten sind bei den gezeigten Ausführungsbeispielen jeweils mit einer Klemmschraube 22 am Grundkörper 12 fixiert. Die Ausführungsformen nach Fig. 1 bis 4 unterscheiden sich dabei in der Form der Schneidplatten 16',16",16"',16^{IV} und in der Art ihrer Anordnung und Anbringung am Grundkörper 12, nicht aber in ihrer Funktion.

Bei dem Ausführungsbeispiel nach Fig. 1a bis d sind vier im Umriss rechteckige Schneidplatten 16' vorgesehen, die radial liegend in Plattensitze 20 am Grundkörper 12 eingesetzt und mittels achsparallel ausgerichteter Klemmschrauben 22 am Grundkörper 12 fixiert sind. An jedem der Plattensitze 20 befindet sich außerdem ein Verstellmechanismus 24 zur radialen Feinverstellung der Schneidplatten 16' in ihrem Plattensitz 20.

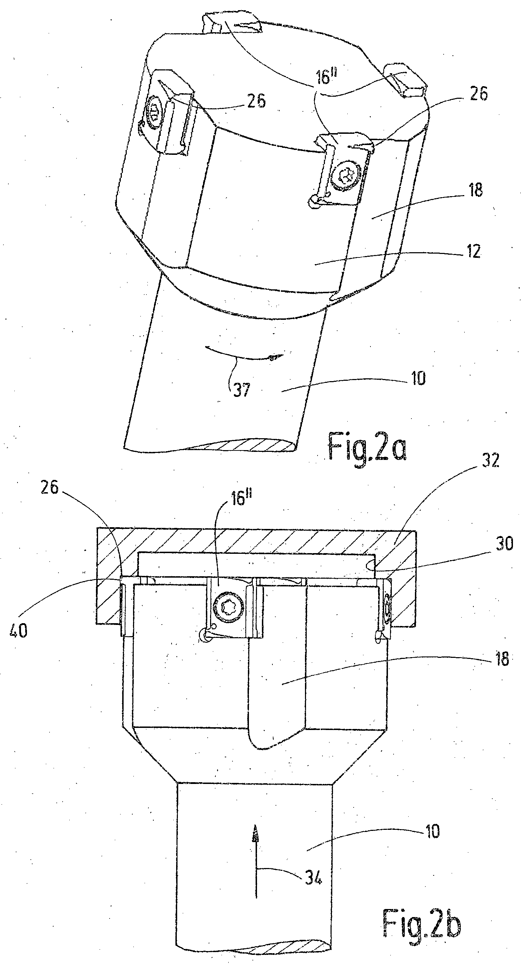

Bei dem Ausführungsbeispiel nach Fig. 2a und b sind die im Umriss rechteckigen Schneidplatten 16" tangential stehend in ihre Plattensitze eingesetzt und mittels radial ausgerichteter Klemmschrauben 22 am Grundkörper 12 fixiert.

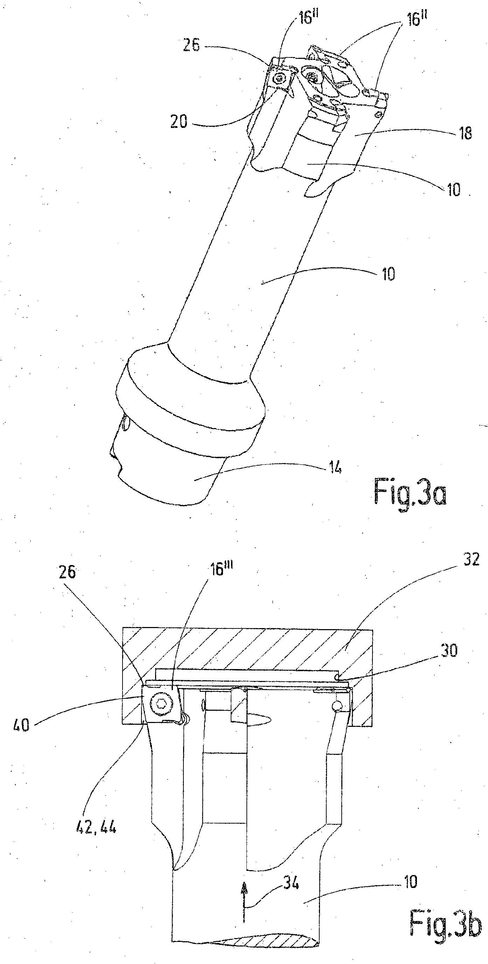

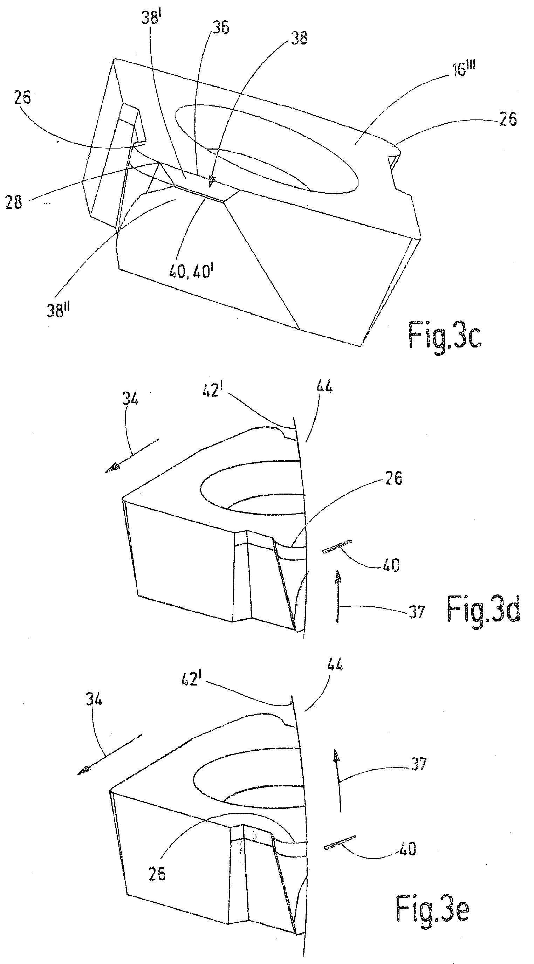

Bei dem Ausführungsbeispiel nach Fig. 3a bis e sind die vier Schneidplatten 16'" radial stehend in ihrer Plattensitze 20 eingesetzt und mittels tangential ausgerichteter Klemmschrauben 22 am Grundkörper 12 fixiert.

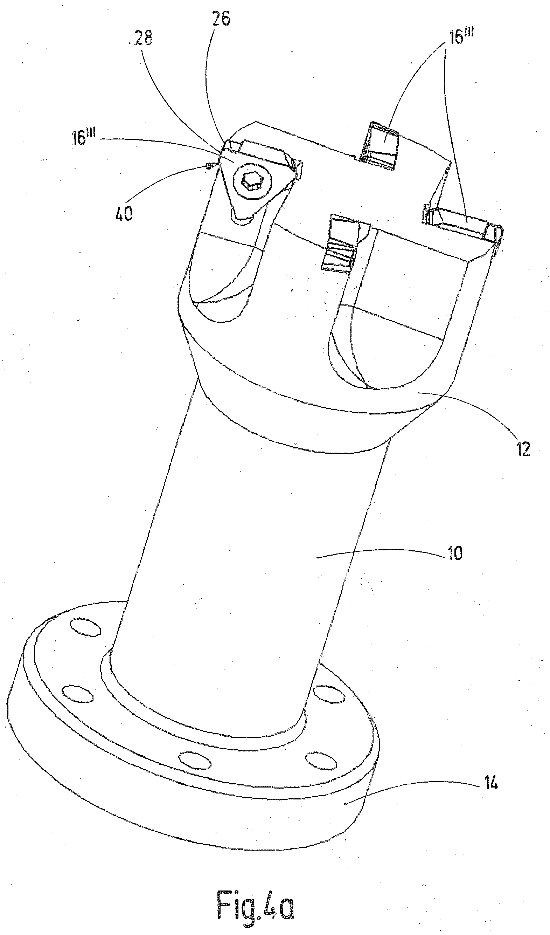

Bei dem in Fig. 4a gezeigten Ausführungsbeispiel sind vier im Umriss dreieckige Schneidplatten 16^{IV} vorgesehen, die radial stehend in die zugehörigen Plattensitze 20 eingesetzt sind und mittels tangential ausgerichteter Klemmschrauben 22 am Grundkörper fixiert sind.

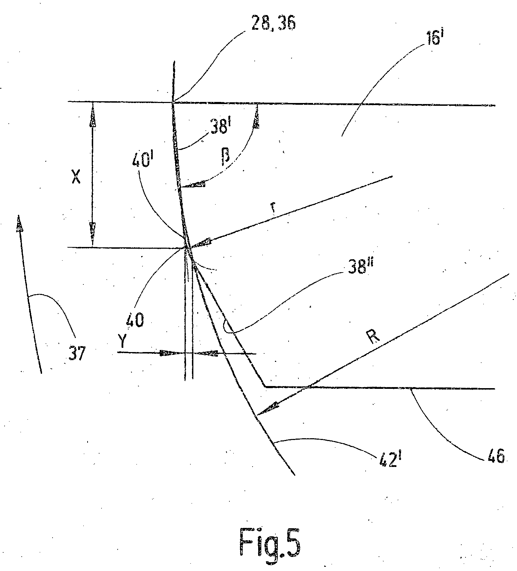

Allen Ausführungsbeispielen nach Fig. 1 bis 4 gemeinsam ist die Anordnung der im eingebauten Zustand der Schneidplatten 16',16",16"',16^{IV} im Bereich einer Plattenecke 25 befindlichen aktiven Hauptschneide 26, die an ihrem äußersten Ende 28 beim Bohrvorgang einen Flugkreisradius R definiert und mit einer vorgegebenen Schnitttiefe t im Bereich eines vorgeformten Rundlochs 30 in ein zu bearbeitendes Werkstück 32 eindringt. Weiter ist an den Schneidplatten eine entgegen einer Vorschubrichtung (Pfeil 34) an das äußerste Ende 28 der aktiven Hauptschneide 26 anschließende, über ihre gesamte Länge auf einem gegenüber dem Flugkreisradius R der Hauptschneide kleineren Radius angeordnete Nebenschneide 36 vorgesehen. Entgegen der Drehrichtung 37 des Schneidwerkzeugs schließt an die Nebenschneide 36 eine Nebenschneidenfreifläche 38 an, die eine entgegen der Drehrichtung 37 im Abstand X von der Nebenschneide 36 angeordnete Stützpartie 40 aufweist, deren Umlaufradius um ein Überstandsmaß Y größer als der Flugkreisradius der aktiven Hauptschneide ist (Fig. 5). Die Nebenschneidenfreifläche 38 ist durch eine im Abstand X von der Nebenschneide 36 angeordnete Verrundung 40', die einen Krümmungsradius r aufweist, in eine primäre Nebenschneidenfreifläche 38' und eine sekundäre Nebenschneidenfreifläche 38" unterteilt, wobei die Stützpartie 40 im Bereich der Verrundung 40' angeordnet ist. Der Krümmungsradius r der Verrundung wird zweckmäßig im Bereich von 0,01 bis 3 mm gewählt.

Die vorstehend beschriebenen geometrischen Verhältnisse der Anschnittgeometrie im Bereich der Nebenschneide 36 und der Nebenschneidenfreifläche 38 sind in Fig. 5 veranschaulicht. Dort ist auch der geometrische Ort 42' des Flugkreises mit dem Radius R eingezeichnet, der in einem aufzubohrenden Werkstück 32 die Bohrung 42 mit dem Radius R entspricht. In Fig. 5 erkennbar ist, dass die Stützpartie 40 mit dem Überstandsmaß Y über den Flugkreis 42' übersteht und damit beim Aufbohrvorgang innerhalb der Bohrung 42 zu einer Abstützung und Glättung der zuvor von der Hauptschneide erzeugten Bohrungswand 44 führt.

Anhand der Fig. 1b, 2b, 3b und 4b ist erkennbar, wie das Werkzeug beim Aufbohrvorgang mit einer vorgegebenen Schnitttiefe t im Bereich eines vorgeformten Rundlochs 30 in das Werkstück 32 mit den aktiven Hauptschneiden der Schneidplatten 16',16",16"',16^{IV} eindringt und dabei das Rundloch 30 um das Maß der Schnitttiefe auf den Radius R aufweitet.

Weiter ist in den Fig. 1d sowie 3d und e angedeutet, wie die Schneidplatten 16',16"' der betreffenden Schneidwerkzeuge sich mit den Stützpartien 40 an der Bohrungsinnenfläche abstützen und in diesem Bereich zu einer elastischen Verformung und Glättung der Bohrungswand 44 führen. Die über den Flugkreisradius R überstehenden Stützpartien 40 haben je nach Anstellung der betreffenden Schneidplatte 16',16'" in Bezug auf die Drehachse die Umrissgestalt eines in Vorschubrichtung langgestreckten Rechtecks (Fig. 3d) oder Dreiecks (Fig. 1d und Fig. 3e). Im Falle der Fig. 1d läuft das langgestreckte Dreieck in der Vorschubrichtung 34 und im Falle der Fig. 3e entgegen der Vorschubrichtung 34 spitz zu. Das Überstandsmaß Y der Stützpartie ist so gewählt, dass die Reibung gering bleibt und eine Glättung der Bohrungswand 44 ohne Riefenbildung möglich ist. Dies wird erreicht, wenn das Überstandsmaß Y kleiner als 5 µm ist.

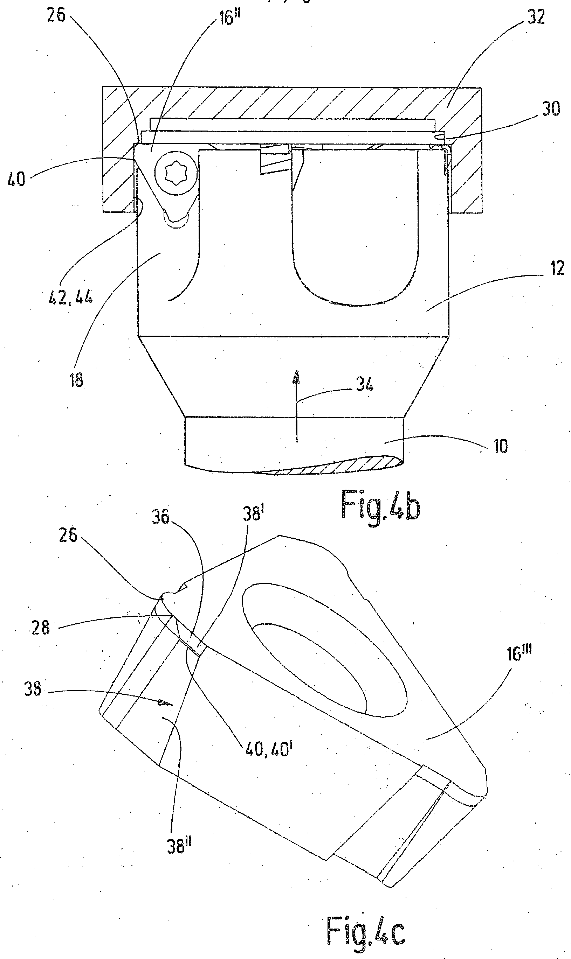

Der in Umfangsrichtung gemessene Abstand X der Stützpartie 40 von der Nebenschneide 36 beträgt ca. 0,01 R bis 0,04 R, wobei R den Flugkreisradius der Hauptschneide 26 bedeutet. Bei den Ausführungsbeispielen nach Fig. 1 bis 3 sind die Schneidplatten 16',16",16"' als Wendeschneidplatten mit jeweils zwei Hauptschneiden 26 und den zugehörigen Stützpartien 40 ausgebildet, während im Falle der Fig. 4 dreieckige Wendeschneidplatten 16^{IV} mit drei Hauptschneiden 26 und den zugehörigen Stützpartien 40 vorgesehen sind. Die Bodenfläche 46 und die nicht aktiven Freiflächen dienen zur Abstützung der Wendeschneidplatten in den zugehörigen Plattensitzen 20 oder in nicht dargestellten Plattenkassetten zur Fixierung und Stabilisierung im Grundkörper 12.

## Patentansprüche

1. Bohrwerkzeug für den Einsatz in Werkzeugmaschinen mit mindestens zwei in gleichem Umfangsabstand voneinander angeordneten Schneidplatten (16', 16", 16"', 16^{IV}), die je eine an ihrem äußersten Ende (28) bei drehendem Einsatz einen Flugkreisradius (R) definierende aktive Hauptschneide (26) aufweisen, mit je einer entgegen einer Vorschubrichtung (34) an das äußerste Ende (28) der jeweiligen Hauptschneide (26) anschließenden, über ihre gesamte Länge auf einem gegenüber dem Flugkreisradius (R) kleineren Radius angeordneten Nebenschneide (36), und mit je einer entgegen der Drehrichtung (37) an die Nebenschneide (36) anschließenden, die Führung des Bohrwerkzeugs unterstützenden Nebenschneidenfreifläche (38), **dadurch gekennzeichnet, dass** das Bohrwerkzeug als Aufbohrwerkzeug ausgebildet ist, dessen aktive Hauptschneiden (26) im Bereich einer Plattenecke (25) der Schneidplatten angeordnet sind und bei drehendem Einsatz mit einer vorgegebenen Schnitttiefe (t) im Bereich eines vorgeformten Rundlochs (30) in ein Werkstück eindringen und dass die Nebenschneidenfreifläche (38) einer jeden Schneidplatte eine entgegen der Drehrichtung (37) im Abstand von der Nebenschneide (36) und entgegen der Vorschubrichtung (34) im Abstand von der Hauptschneide (26) angeordnete Stützpartie (40) aufweist, deren Umlaufradius um ein Überstandsmaß (Y) größer als der Flugkreisradius (R) der aktiven Hauptschneide (26) ist.

2. Bohrwerkzeug nach Anspruch 1, **dadurch gekennzeichnet, dass** die Nebenschneidenfreifläche (38) einer jeden Schneidplatte durch eine entgegen der Drehrichtung (37) im Abstand von der Nebenschneide (36) angeordnete Verrundung (40") in eine primäre und eine sekundäre Nebenschneidenfreifläche (38', 38") unterteilt ist, wobei die Stützpartie (40) im Bereich der Verrundung (40') angeordnet ist.

3. Bohrwerkzeug nach Anspruch 1 oder 2, **dadurch gekennzeichnet, dass** die Stützpartie (40) in Vorschubrichtung (34) langgestreckt ist.

4. Bohrwerkzeug nach einem der Ansprüche 1 bis 3, **dadurch gekennzeichnet, dass** die Stützpartie (40) die Umrissgestalt eines in Vorschubrichtung (34) langgestreckten Rechtecks oder eines langgestreckten Dreiecks aufweist.

5. Bohrwerkzeug nach Anspruch 4, **dadurch gekennzeichnet, dass** das langgestreckte Dreieck in oder entgegen der Vorschubrichtung (34) spitz zuläuft.

6. Bohrwerkzeug nach einem der Ansprüche 1 bis 5, **dadurch gekennzeichnet, dass** das Überstandsmaß (Y) der Stützpartie (40) < 20 µm, vorzugsweise < 5 µm beträgt..

7. Bohrwerkzeug nach einem der Ansprüche 1 bis 6, **dadurch gekennzeichnet, dass** der in Umfangsrichtung gemessene Abstand (X) der Stützpartie (40) von der Nebenschneide 0,01 R bis 0,04 R beträgt, wobei R den Flugkreisradius der jeweiligen Hauptschneide (26) bedeutet.

8. Bohrwerkzeug nach einem der Ansprüche 1 bis 7, **dadurch gekennzeichnet, dass** die Schneidplatten als Wendeschneidplatten ausgebildet sind, die jeweils mindestens zwei Hauptschneiden (26) mit den zugehörigen Stützpartien (40) aufweisen.

9. Bohrwerkzeug nach Anspruch 8, **dadurch gekennzeichnet, dass** die Wendeschneidplatten mittels je eines Klemm- oder Spannelements (22) im Grundkörper (12) fixiert sind.

10. Bohrwerkzeug nach Anspruch 9, **dadurch gekennzeichnet, dass** das Klemmelement als Klemmschraube (22) ausgebildet ist.

11. Bohrwerkzeug nach einem der Ansprüche 8 bis 10, **dadurch gekennzeichnet, dass** die Wendeschneidplatten (16; 16", 16"', 16^{IV}) radial liegend, radial stehend oder tangential stehend am Grundkörper (12) angeordnet sind.

## Claims

1. Drilling tool for use in machine tools, comprising at least two cutting inserts (16', 16'', 16'", 16^{IV}) which are arranged at the same circumferential distance from one another and which each have an active major cutting edge (26) which defines a pitch circle radius (R) at their outermost end (28) during rotary use, comprising in each case a minor cutting edge (36) which adjoins the outermost end (28) of the respective major cutting edge (26) against a feed direction (34) and is arranged over its entire length on a smaller radius than the pitch circle radius (R), and comprising in each case a minor cutting edge flank (38) which adjoins the minor cutting edge (36) against the direction of rotation (37) and assists the guidance of the drilling tool, **characterized in that** the drilling tool is designed as a boring tool whose active major cutting edges (26) are arranged in the region of an insert corner (25) of the cutting inserts and penetrate during rotary use with a predetermined cutting depth (t) into a workpiece in the region of a preformed round hole (30), and **in that** the minor cutting edge flank (38) of each cutting insert has a support part (40) which is arranged at a distance from the minor cutting edge (36) against the direction of rotation (37) and at a distance from the major cutting edge (26) against the feed direction (34), the radius of revolution of which support part is greater than the pitch circle radius (R) of the active major cutting edge (26) by a projecting size (Y).

2. Drilling tool according to Claim 1, **characterized in that** the minor cutting edge flank (38) of each cutting insert is divided into a primary and a secondary minor cutting edge flank (38', 38'') by a rounded portion (40'') arranged at a distance from the minor cutting edge (36) against the direction of rotation (37), the support part (40) being arranged in the region of the rounded portion (40').

3. Drilling tool according to Claim 1 or 2, **characterized in that** the support part (40) is elongated in the feed direction (34).

4. Drilling tool according to one of Claims 1 to 3, **characterized in that** the support part (40) has the outline form of a rectangle elongated in the feed direction (34) or of an elongated triangle.

5. Drilling tool according to Claim 4, **characterized in that** the elongated triangle tapers to a point in or against the feed direction (34).

6. Drilling tool according to one of Claims 1 to 5, **characterized in that** the projecting size (Y) of the support part (40) is < 20 µm, preferably < 5 µm.

7. Drilling tool according to one of Claims 1 to 6, **characterized in that** the distance (X), measured in the circumferential direction, of the support part (40) from the minor cutting edge is 0.01 R to 0.04 R, where R is the pitch circle radius of the respective major cutting edge (26).

8. Drilling tool according to one of Claims 1 to 7, **characterized in that** the cutting inserts are designed as indexable cutting inserts which each have at least two major cutting edges (26) with the associated support parts (40).

9. Drilling tool according to Claim 8, **characterized in that** the indexable cutting inserts are each fixed in the parent body (12) by means of a clamping or tightening element (22).

10. Drilling tool according to Claim 9, **characterized in that** the clamping element is designed as a clamping screw (22).

11. Drilling tool according to one of Claims 8 to 10, **characterized in that** the indexable cutting inserts (16; 16", 16"', 16^{IV}) are arranged on the parent body (12) in a radial horizontal position, radial vertical position or tangential vertical position.

## Revendications

1. Outil de perçage pour l'utilisation dans des machines-outils, comprenant au moins deux plaquettes de coupe (16', 16", 16"', 16^{IV}) disposées à la même distance périphérique les unes des autres, qui présentent chacune à leur extrémité la plus extérieure (28) une arête de coupe principale active (26) définissant un rayon d'orbite (R) lors de l'utilisation en rotation, ayant chacune une arête de coupe secondaire (36) se raccordant dans le sens opposé à la direction d'avance (34) à l'extrémité la plus extérieure (28) de l'arête de coupe principale respective (26), disposée sur toute sa longueur sur un plus petit rayon par rapport au rayon d'orbite (R) et ayant chacune une surface exempte d'arête de coupe secondaire (38) se raccordant dans le sens opposé au sens de rotation (37) à l'arête de coupe secondaire (36), supportant le guidage de l'outil d'alésage, **caractérisé en ce que** l'outil de perçage est réalisé sous forme d'outil d'alésage, dont les arêtes de coupe principales actives (26) sont disposées dans la région d'un coin de plaquettes (25) des plaquettes de coupe et, lors de l'utilisation en rotation, pénètrent avec une profondeur de coupe prédéfinie (t) dans la région d'un trou rond préformé (30) dans une pièce et **en ce que** la surface exempte d'arête de coupe secondaire (38) de chaque plaquette de coupe présente une partie de support (40) disposée dans le sens opposé au sens de rotation (37) à distance de l'arête de coupe secondaire (36) et dans le sens opposé à la direction d'avance (34) à distance de l'arête de coupe principale (26), dont le rayon de rotation est supérieur au rayon d'orbite (R) de l'arête de coupe principale active (26) d'une mesure de dépassement (Y).

2. Outil de perçage selon la revendication 1, **caractérisé en ce que** la surface exempte d'arête de coupe secondaire (38) de chaque plaquette de coupe est divisée en une surface exempte d'arête de coupe secondaire primaire et secondaire (38', 38") par un arrondi (40'') disposé dans le sens opposé au sens de rotation (37) à distance de l'arête de coupe secondaire (36), la partie de support (40) étant disposée dans la région de l'arrondi (40').

3. Outil de perçage selon la revendication 1 ou 2, **caractérisé en ce que** la partie de support (40) est allongée dans la direction d'avance (34).

4. Outil de perçage selon l'une quelconque des revendications 1 à 3, **caractérisé en ce que** la partie de support (40) présente un pourtour en forme de rectangle allongé ou de triangle allongé dans la direction d'avance (34).

5. Outil de perçage selon la revendication 4, **caractérisé en ce que** le triangle allongé se termine en pointe dans la direction d'avance (34) ou dans la direction opposée.

6. Outil de perçage selon l'une quelconque des revendications 1 à 5, **caractérisé en ce que** la dimension de dépassement (Y) de la partie de support (40) est < 20 µm, de préférence < 5 µm.

7. Outil de perçage selon l'une quelconque des revendications 1 à 6, **caractérisé en ce que** la distance (X), mesurée dans la direction périphérique, de la partie de support (40) à l'arête de coupe secondaire vaut 0,01 R à 0,04 R, R étant le rayon d'orbite de l'arête de coupe principale respective (26).

8. Outil de perçage selon l'une quelconque des revendications 1 à 7, **caractérisé en ce que** les plaquettes de coupe sont réalisées sous forme de plaquettes de coupe amovibles qui présentent à chaque fois au moins deux arêtes de coupe principales (26) avec les parties de support associées (40).

9. Outil de perçage selon la revendication 8, **caractérisé en ce que** les plaquettes de coupe amovibles sont fixées au moyen d'un élément de serrage ou de coinçage respectif (22) dans le corps de base (12).

10. Outil de perçage selon la revendication 9, **caractérisé en ce que** l'élément de serrage est réalisé sous forme de vis de serrage (22).

11. Outil de perçage selon l'une quelconque des revendications 8 à 10, **caractérisé en ce que** les plaquettes de coupe amovibles (16 ; 16", 16''', 16^{IV}) sont disposées de manière à être couchées radialement, à se tenir radialement ou à se tenir tangentiellement sur le corps de base (12).
